# EUROPEAN PATENT SPECIFICATION

(11) **EP 3 802 284 B1**
(45) Date of publication and mention of the grant of the patent: **29.06.2022**
(21) Application number: 18735698.5
(22) Date of filing: 25.05.2018
(51) Int. Cl.: B62D 15/02

(54) **CHAIN-DRIVEN STEERING ANGLE SENSOR**
KETTENGETRIEBENER LENKWINKELSENSOR
CAPTEUR D'ANGLE DE BRAQUAGE COMMANDÉ PAR CHAÎNE

(30) Priority: 24.05.2018 PT 2018110755
(43) Date of publication of application: 14.04.2021
(73) Proprietor: Bosch Car Multimedia Portugal, S.A., 4705-820 Braga (PT); Universidade do Minho, 4704-553 Braga (PT)
(72) Inventor: BIZARRO DE MEIRELES, José Filipe, 4800-019 Guimarães (PT); MOHAMMAD MOHSEN SABET, Seyyed, 4800-073 Guimarães (PT); MALHEIRO DOURADO, Marco Daniel, 4700-374 Braga (PT); AZEVEDO GONÇALVES, José António, 4750-173 Arcozelo BCL (PT); ALVES PINTO PEREIRA, António José, 4810-253 Guimarães (PT)
(74) Representative: Ferreira, Maria Silvina
(86) International application number: PCT/IB2018/053754
(87) International publication number: WO 2019/224587

(56) References cited:
- WO-A1-2007/065496
- DE-A1- 19 807 522
- DE-A1-102010 033 769
- DE-A1-102011 108 107

## Description

### Technical field

This application relates to chain-driven steering angle sensor.

### Background art

A steering angle sensor (SAS) is a device that continuously measures the angle, position and speed of rotation of the tires. The SAS is usually coupled to the steering column or in the steering box of the vehicle. The information measured by the SAS is sent for analysis to the car control system, where together with information provided by other sensors, are used to control various driving assistance systems, such as electronic stability control, power steering and active steering control.

A secured connection throughout the lifetime of a transmission system is a key factor in a given assembly. There are a number of SAS design proposals such as the ones disclosed in the documents US 2009/0309583 A1 or EP 2603774 B1. Typically, the structure of the sensor is composed of a housing and a cover. Inside there is a gear system containing two small magnetic gears and a larger one that is driven by the steering column of the vehicle and a PCB board. The sensors therein disclosed are based on direct engagement of plastic gears, which promote deformation of the contacting gears, generate noise and are susceptible to temperature changes, due to different coefficient of thermal expansion values of the plastic components used.

Numerous transmission systems rely on chain instead of direct contact of gears. Document DE 102011108107 A1 discloses a device for measuring position angle of a steering shaft of a motor vehicle. The device includes a driving member coupled to the shaft, and a first driven element with a permanent magnet sensor integrated. Both components are directly coupled through a chain-driven transmission assembly, which implies the existence of a physical axis of rotation in each of the component to support radial forces, increasing the radial stresses and the slip friction of the chain.

Document DE 19807522 A1, which document discloses the features of the preamble of claim 1, discloses a rotation angle and rpm sensor for a steering column of a motor vehicle. The sensor comprises at least one fixed sensor element, which detects a physical change caused by the rotation of a mechanical part. Said mechanical part rotates to drive a transmission, which passes the sensor element. In each position of the transmission medium, an absolute value concerning the angle position and the absolute RPM of the mechanical part is determined. The sensor element and the mechanical part are directly coupled through a chain-driven transmission assembly, which implies the existence of a physical axis of rotation in each of the component to support radial forces, increasing the radial stresses and the slip friction of the chain.

### Summary

The present application discloses a chain-driven steering angle sensor comprising a housing and a cover, used to enclose:
- A processing unit;
- A gear assembly, formed by a hub, to couple to a rotatable component whose rotation angle is to be measured, and by at least two magnetic gears;
- A timing-chain, coupling the hub and the at least two magnetic gears;
- Rollers;
- Chain guides;

Wherein, the rollers are positioned around the gear assembly to provide a tangential contact between the timing-chain and the hub and between the timing-chain and each magnetic gear.

In one embodiment of the sensor, the hub and the magnetic gears are provided with toothed structure in its surface.

In another embodiment of the sensor, the timing-chain is of a rubber material.

Yet in another embodiment of the sensor, the timing-chain is of a neoprene material, reinforced with glass fiber, polyester and aramid.

In one embodiment of the sensor, the rollers are of a plastic material.

In another embodiment of the sensor, the rollers are made of polyurethane.

In one embodiment of the sensor, the number and position of the rollers and the chain guides very depending on the geometry of the gear assembly.

In one embodiment of the sensor, it comprises six rollers and six chain guides.

### General description

The present application discloses a chain-driven steering angle sensor, developed with the purpose of solving the problems associated to state of the art SAS systems, related either to precision throughout the lifespan of the sensor, sensitivity to temperature changes, and noise emission levels.

According to principles described herein, it is proposed a chain-driven steering angle sensor, for determining the rotation angle of a rotating shaft at the shaft end. The sensor is coupled to a rotatable component and it is based on a driven transmission assembly using a timing-chain. Therefore, it is an object of the present application to propose a chain-driven steering angle sensor providing higher precision, lower sensitivity to temperature changes, as well as reduced noise emission levels.

In accordance with one aspect of the present application, the above and other objects can be accomplished by means of a chain-driven steering angle sensor, which allows the transmission of the rotary movement of the rotatable component through a gear assembly via a timing chain. To accomplish that, the sensor now developed is based on a chain-driven transmission mechanism, composed of a gear assembly formed by a large gear (hub), that is coupled to the rotatable component, and at least two magnetic gears, a set of rollers and a timing-chain. A housing and a cover enclose the sensor, comprising both elements, in its inner sides, chain guides used to avoid the timing-chain displacement from the hub and from the magnetic gears. Both the hub and the magnetic gears are provided with toothed structure in its surface for coupling the timing-chain, in order to transfers torque of the rotatable component from the hub onto the magnetic gears.

The rollers are used in the transmission chain to establish the position of the timing-chain and its respective coupling among the hub and the magnetic gears. They are positioned such that the timing-chain has a tangential contact with the hub and the magnetic gears, allowing that the transmission of the movement is made by tangential contact in each of the components, minimizing the radial stresses while decreasing the slip friction of the timing-chain as well as the torque required for the movement. Tangential contact, in the context of this description, should be interpreted as the contact between the timing-chain and the surface of the hub and the magnetic gears is to be performed at a single contact point. The number and position of the rollers can vary depending on the geometry of the gear assembly.

The geometry and position of the chain-driven transmission developed, in relation to the hub, magnetic gears and the rollers, is such that provides constant engagement between the chain and the gears teeth, at the tangential point of contact. This allows easy transmission of force, while minimizing the contact length with both the hub and the magnetic gears and hence resulting in reduced friction and rattling noise due to temperature changes.

The timing-chain can be made of rubber or neoprene reinforced with glass fiber, polyester and aramid, which allows expanding or contracting due to temperature changes and thus absorbs deformation of the gears and housing. Rollers are made of plastic materials, e.g. polyurethane.

The chain-driven transmission assembly developed presents advantages over the conventional SAS systems:
- Higher precision due to constant engagement between the chain and the gear teeth of the hub and the magnetic gears: the movement transmission by the chain is carried out with greater precision, since there is no direct contact between magnetic gears and hub and hence gap among them is eliminated;
- Less sensitivity to temperature changes, as the deformations imposed by the variation of temperature are compensated through the elasticity of the chain-driven assembly, which is distributed along the timing-chain perimeter;
- Lower noise generation as there is no direct contact among the gears teeth, and the rubber-like behavior of the chain. The chain can expand and decrease in length and therefore can deform to avoid the deformation of the gears and housing.

The sensor also comprises a processing unit, configured to determine the absolute rotatable component angle, based on changes on the field direction of the magnetic gears in accordance with the rotational movement transmitted by the timing-chain from the hub to said magnetic gears.

### Brief description of drawings

For easier understanding of this application, figures are attached in the annex that represent forms of implementation, which nevertheless are not intended to limit the technique disclosed herein.
Figure 1 illustrates the chain-driven transmission assembly in which the proposed steering angle sensor is based. The reference numbers represent:
   1 - Hub;
   2 - Magnetic gear;
   3 - Roller;
   4 - Timing-chain;
   5 - Chain guide;
   6 - Housing.
Figure 2 illustrates the chain guide on the inner side of the sensor's cover, in which the reference numbers represent:
   5 - Chain guide;
   7 - Cover.

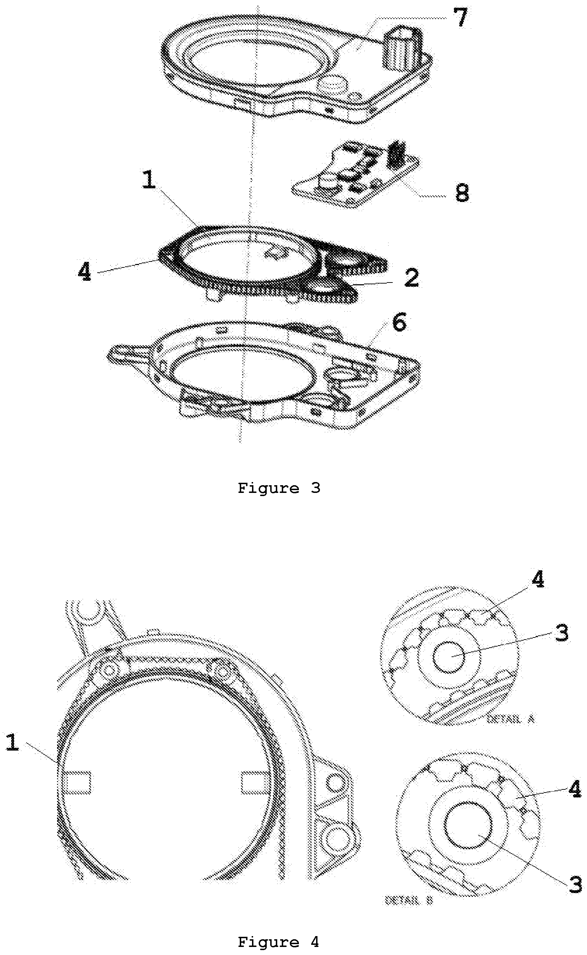

Figure 3 illustrates an exploded view of the sensor developed, in which reference numbers represent:
   1 - Hub;
   2 - Magnetic gear;
   4 - Timing-chain;
   6 - Housing;
   7 - Cover;
   8 - Processing unit.
Figure 4 illustrates the position of the chain mechanism in relation to the hub and the rollers, in which the reference numbers represent:
   1 - Hub;
   3 - Roller;
   4 - Timing-chain.

### Description of the embodiments

Now, embodiments of the present application will be described with reference to the annexed drawings. However, they are not intended to limit the scope of this application.

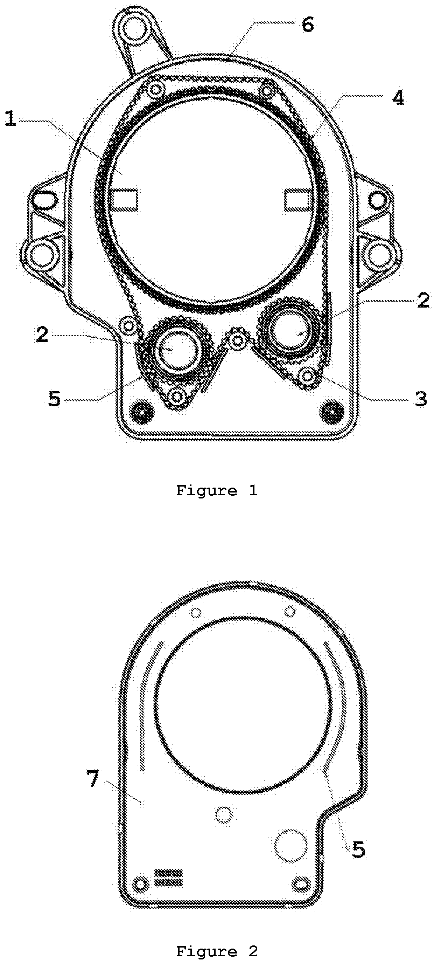

In one embodiment, according to figure 1, it is developed a chain-driven steering angle sensor for determining the rotation angle of a steering wheel column. The sensor is composed by a hub (1), which is coupled to the steering wheel column, two magnetic gears (2), six rollers (3), and a timing-chain (4). A housing (6) and a cover (7) enclose the sensor. Six chain guides (5), mounted on the housing (6) and on the cover (7), are used to avoid the timing-chain (4) displacement from the gear assembly. The sensor also comprises a processing unit (8), configured to determine the steering wheel column rotation angle, based on changes on the field direction of the two magnetic gears (2) in accordance with the rotational movement transmitted by the timing-chain (4) from the hub (1) to said magnetic gears (2) .

In one embodiment, the timing-chain (4) is made of rubber or neoprene reinforced with glass fiber, polyester, aramid and Kevlar.

In yet another embodiment, the rollers (6) are made of plastic materials, e.g. polyurethane.

This description is of course not in any way restricted to the forms of implementation presented herein and any person with an average knowledge of the area can provide many possibilities for modification thereof without departing from the general idea as defined by the claims. The forms of implementation described above can obviously be combined with each other. The following claims further define the invention .

## Claims

1. Chain-driven steering angle sensor comprising a housing (6) and a cover (7), used to enclose:
- A processing unit (8);
- A gear assembly, formed by a hub (1); to couple to a rotatable component whose rotation angle is to be measured, and by at least two magnetic gears(2);
- A timing-chain (4), coupling the hub and the at least two magnetic gears (2);
**characterized by**:
- Rollers (3, 6);
- Chain guides (5);
wherein the rollers (3, 6) are positioned around the gear assembly to provide a tangential contact between the timing-chain (4) and the hub (1) and between the timing-chain (4) and each magnetic gear (2).

2. Sensor according to claim 1, wherein the hub (1) and the magnetic gears (2) are provided with toothed structure in its surface.

3. Sensor according to any of the previous claims, wherein the timing-chain (4) is of a rubber material.

4. Sensor according to any of the previous claims 1 or 2, wherein the timing-chain (4) is of a neoprene material, reinforced with glass fiber, polyester and aramid.

5. Sensor according to any of the previous claims, wherein the rollers (3, 6) are of a plastic material.

6. Sensor according to claim 5, wherein the rollers Z (3, 6) are made of polyurethane.

7. Sensor according to any of the previous claims, wherein the number and position of the rollers (3, 6) and the chain guides (5) vary depending on the geometry of the gear assembly.

8. Sensor according to claim 7, comprising six rollers (3, 6) and six chain guides (5).

## Patentansprüche

1. Kettengetriebener Lenkwinkelsensor, bestehend aus einem Gehäuse (6) und einer Abdeckung (7), die zum Einbau folgender Komponenten verwendet werden:
- Einer Verarbeitungseinheit(8);
- Einer Zahnradbaugruppe, gebildet aus einem Drehkranz (1),
um ein drehbares Bauteil anzukoppeln, dessen Drehwinkel gemessen werden soll, und aus mindestens zwei magnetischen Zahnrädern(2);
- Einer Steuerkette (4), welche den Drehkranz und die mindestens zwei magnetischen Zahnräder (2) verbindet;
**gekennzeichnet durch**:
- Rollen (3, 6);
- Kettenführungen(5);
worin die Rollen (3, 6) um die Zahnradbaugruppe angeordnet sind, um einen tangentialen Kontakt zwischen der Steuerkette (4) und
dem Drehkranz (1) und zwischen der Steuerkette (4) und jedem magnetischen Zahnrad (2) zu gewährleisten.

2. Sensor gemäß Anspruch 1, worin der Drehkranz (1) und die magnetischen Zahnräder (2) mit einer Zahnstruktur auf ihrer Oberfläche versehen sind.

3. Sensor gemäß einem der vorhergehenden Ansprüche, worin die Steuerkette (4) aus einem Gummimaterial besteht.

4. Sensor gemäß einem der vorhergehenden Ansprüche 1 oder 2, worin die Steuerkette (4) aus einem Neoprene-Werkstoff besteht, der mit Glasfaser, Polyester und Aramid verstärkt ist.

5. Sensor gemäß einem der vorhergehenden Ansprüche, worin die Rollen (3, 6) aus einem Kunststoffmaterial bestehen.

6. Sensor gemäß Anspruch 5, worin die Rollen (3, 6) aus Polyurethan hergestellt werden.

7. Sensor gemäß einem der vorhergehenden Ansprüche, worin die Anzahl und Position der Rollen (3, 6) und der Kettenführungen (5) in Abhängigkeit von der Geometrie der Getriebebaugruppe variiert.

8. Sensor gemäß Anspruch 7, bestehend aus sechs Rollen (3, 6) und sechs Kettenführungen (5).

## Revendications

1. Capteur d'angle de braquage commandé par chaîne comprenant un logement (6) et un couvercle(7), utilisés pour enfermer :
- une unité de traitement(8) ;
- un ensemble d'engrenages, formé par un moyeu ;
pour se coupler à un élément rotatif dont l'angle de rotation doit être mesuré, et à au moins deux engrenages magnétiques (2) ;
- une chaîne de synchronisation (4), couplant le moyeu et les au moins deux engrenages magnétiques (2);
**caractérisé par** :
- des rouleaux(3, 6) ;
- des guides de chaîne(5) ;
dans lesquels les rouleaux (3, 6) sont positionnés autour de l'ensemble d'engrenages pour fournir un contact tangentiel entre la chaîne de synchronisation (4) et
le moyeu (1) et entre la chaîne de synchronisation (4) et chaque engrenage magnétique (2).

2. Capteur selon la revendication 1, dans lequel le moyeu (1) et les engrenages magnétiques (2) sont fournis avec une structure dentée à leur surface.

3. Capteur selon l'une quelconque des revendications précédentes, dans lequel la chaîne de synchronisation (4) est en matériau caoutchouteux.

4. Capteur selon l'une quelconque des revendications précédentes 1 ou 2, dans lequel la chaîne de synchronisation (4) est en matériau néoprène, renforcé avec de la fibre de verre, du polyester et de l'aramide.

5. Capteur selon l'une quelconque des revendications précédentes, dans lequel les rouleaux (3, 6) sont en matériau plastique.

6. Capteur selon la revendication 5, dans lequel les rouleaux (3, 6) sont fait de polyuréthane.

7. Capteur selon l'une quelconque des revendications précédentes, dans lequel le nombre et la position des rouleaux (3, 6) et des guides de chaîne (5) varient en fonction de la géométrie de l'ensemble d'engrenages.

8. Capteur selon la revendication 7, comprenant six rouleaux (3, 6) et six guides de chaîne (5).
